# EUROPÄISCHE PATENTSCHRIFT

(11) **EP 2 442 087 B1**
(45) Veröffentlichungstag und Bekanntmachung des Hinweises auf die Patenterteilung: **06.12.2017**
(21) Anmeldenummer: 11184978.2
(22) Anmeldetag: 13.10.2011
(51) Int. Cl.: G01M 1/04

(54) **Vorrichtung zur Lagerung eines auszuwuchtenden Rotors in einer Auswuchtmaschine**
Device for bearing a rotor to be balanced in a balancing machine
Dispositif pour le stockage d'un rotor devant être équilibré dans une machine d'équilibrage

(30) Priorität: 15.10.2010 DE 102010038213
(43) Veröffentlichungstag der Anmeldung: 18.04.2012
(73) Patentinhaber: Schenck RoTec GmbH, 64293 Darmstadt (DE)
(72) Erfinder: Avsar, Enrica, 64291 Darmstadt (DE); Bassmann, Michael, 64291 Darmstadt (DE); Mosch, Ulrich, 64560 Riedstadt (DE); Roth, Wolfgang, 64832 Babenhausen (DE); Weckert, Jürgen, 64560 Riedstadt (DE)
(74) Vertreter: Haar, Lucas Heinz Jörn

(56) Entgegenhaltungen:
- DE-U1- 20 220 706
- DE-U1- 29 820 769

## Beschreibung

Die Erfindung betrifft eine Vorrichtung zur Lagerung eines auszuwuchtenden Rotors, umfassend ein Grundelement mit einer Mittelachse, das dazu ausgebildet ist, um mit einer drehbaren Spindel einer dynamischen Auswuchtmaschine oder einer Aufnahmeachse einer statischen Auswuchtmaschine koaxial verbunden zu werden.

Bei Universalauswuchtmaschinen, die für das Auswuchten von verschiedenen Rotoren bestimmt sind, werden Vorrichtungen benötigt, welche geeignet sind, Rotoren von vielfältiger Beschaffenheit, z.B. mit der drehbaren Spindel der Auswuchtmaschine zu verbinden. Die Vorrichtung muss in der Lage sein, die auszuwuchtenden Rotoren möglichst präzise in Bezug auf ihre spätere Rotationsachse zu zentrieren. Weiterhin ist für das rotierende (dynamische) Auswuchten die Übertragung eines Drehmoments von der Spindel auf den Rotor erforderlich, damit die Drehbewegung der Spindel sicher auf den Rotor übertragen werden kann.

Aus DE 20 2009 014 451 U1 ist ein für das Auswuchten von Fahrzeugrädern geeignetes Spannfutter mit zum Spannen radial nach außen bewegte Backen bekannt, die mit sich axial erstreckenden Spannflächen gegen die Innenwand einer zentralen Bohrung eines Fahrzeugrades spannbar sind. Das Spannfutter ist für verschieden große Bohrungsdurchmesser geeignet, erlaubt aber kein Spannen eines Rotors von außen.

Eine andere aus DE 10 2007 030 916 B3 bekannte Vorrichtung zur Aufnahme eines auszuwuchtenden Werkstücks in einer Auswuchtmaschine weist einen axial bewegbaren Spannkonus und eine den Spannkonus umgreifende, geschlitzte Spannhülse auf, durch die das auszuwuchtende Werkstück in einer zentralen Bohrung gespannt werden kann. Auch diese Vorrichtung eignet sich nicht zum Außenspannen. Ihre Anwendung ist auf einen eng begrenzten Bereich von Bohrungsdurchmessern beschränkt.

Eine Auswuchtmaschine für Fahrzeugräder, bei der die Fahrzeugräder mit einem Spanndeckel auf einen Wuchtkopf gespannt werden, ist aus DE 36 41 295 A1 bekannt. Zur Zentrierung des auszuwuchtenden Fahrzeugrades ist ein Spanndorn mit mehreren ringförmig angeordneten Spannsegmenten vorgesehen, der in eine radseitige Zentrierbohrung eingreift und durch Einpressen eines Spreizkonus aufgeweitet werden kann.

Die bekannten Vorrichtungen haben den Nachteil, dass sie nur für einen eng begrenzten Spannbereich und teilweise nur für einen bestimmten Zentrierdurchmesser geeignet sind. Die Drehmomentaufnahme erfolgt in der Regel nur über Reibschluss. Die Sicherheit der Drehmomentübertragung ist daher eingeschränkt und eine Beschädigung der Zentrierflächen am Rotor ist möglich. Das Gewicht der bekannten Vorrichtungen ist vergleichsweise hoch. Dies schränkt den verfügbaren Bereich der zulässigen Belastung der Maschinenspindel durch die Rotormasse ein und beschränkt dadurch auch die Einsatzmöglichkeiten der Auswuchtmaschine.

Der Erfindung liegt die Aufgabe zugrunde, eine Vorrichtung der eingangs genannten Art zu schaffen, die eine genaue Zentrierung von verschiedenen Rotoren über einen extrem weiten Durchmesserbereich ermöglicht.

Erfindungsgemäß wird diese Aufgabe durch eine Vorrichtung mit den in Patentanspruch 1 angegebenen Merkmalen gelöst. Vorteilhafte Ausgestaltungen der Vorrichtung sind in den Ansprüchen 2 bis 11 angegeben.

Die Vorrichtung zur Lagerung eines auszuwuchtenden Rotors umfasst nach der Erfindung ein Grundelement mit einer Mittelachse, das dazu ausgebildet ist, um mit einer drehbaren Spindel einer dynamischen Auswuchtmaschine oder einer Aufnahmeachse einer statischen Auswuchtmaschine koaxial verbunden werden zu können, mehrere Auflageschienen, die mit einem inneren Ende an dem Grundelement befestigt sind, sich im wesentlichen radial zur Mittelachse des Grundelements erstrecken und mit dem anderen äußeren Ende über den äußeren Rand des Grundelements hinausragen und in einer gemeinsamen Radialebene liegende Auflageflächen für den auszuwuchtenden Rotor haben, wobei an jeder Auflageschiene ein Zentrierstück für eine Innen- und/oder Außenzentrierung des Rotors angeordnet ist, das gegenüber der Auflageschiene radial verstellbar und in einer beliebigen Zentrierstellung mit der Auflageschiene fest verbindbar ist.

Die Vorrichtung nach der Erfindung hat den Vorteil, dass sie durch die Einstellbarkeit der Zentrierstücke an die Abmessungen und die Formgestalt einer großen Anzahl unterschiedlichster Rotortypen angepasst werden kann. Die Einstellung der wenigstens drei Zentrierstücke kann einzeln vorgenommen werden, wodurch ein sehr genaues Zentrieren des jeweiligen Rotors in Bezug auf seine Rotationsachse möglich ist. Die erreichbare Zentriergenauigkeit ist höher als die üblicher Dreibackenfutter und erreicht nahezu die Genauigkeit von spielfrei spannenden Aufnahmen, wie z.B. Kegelbüchsendornen. Die erfindungsgemäße Vorrichtung ist außerdem kostengünstig herstellbar und zeichnet sich durch ein im Vergleich zur Größe des maximalen Zentrierdurchmessers geringes Gewicht aus, letzteres ist für die Genauigkeit der Unwuchtmessung besonders vorteilhaft und erhöht die nutzbare Belastbarkeit der Maschinenspindel.

Für verschiedene Anwendungen der Vorrichtung, beispielsweise zum dynamischen Auswuchten, ist nach einem weiteren Vorschlag der Erfindung zur sicheren und schlupffreien Übertragung des Drehmoments auf den auszuwuchtenden Rotor an wenigstens einer Auflageschiene ein Spannstück angeordnet, das radial verstellbar und innerhalb seines Verstellbereiches in einer beliebigen Spannstellung mit der Auflageschiene fest verbindbar ist. Durch die Verstellbarkeit des Spannstücks können axiales Spannen und/oder Übertragung von Drehmoment an viele verschiedene Lagen von Spann- und Übertragungsstellen angepasst werden, die bei verschiedenen Rotortypen und Rotorgrößen vorliegen können. Das Spannstück kann mit verschiedenen Mitnehmerbolzen oder Spannschrauben versehen werden, die zum axialen Spannen und zur formschlüssigen Drehmomentübertragung in Hinterschnitte oder Bohrungen des jeweils auszuwuchtenden Rotors eingreifen.

Um sowohl eine Innenzentrierung als auch eine Außenzentrierung von auszuwuchtenden Rotoren zu ermöglichen, ist nach einem weiteren Vorschlag der Erfindung das Zentrierstück mit einer radial inneren und einer radial äußeren Anlagefläche versehen. Vorzugsweise kann die äußere, aber auch die innere Zentrierfläche eine konvex gekrümmte Anlagefläche aufweisen, deren Krümmungsachse parallel zur Mittelachse des Grundelements ausgerichtet ist. Durch die gekrümmte Anlagefläche wird eine Linienberührung erzielt und die Gefahr einer Beeinträchtigung der Zentriergenauigkeit durch Einflüsse der Zentrierfläche des Rotors vermieden.

Nach einem weiteren Vorschlag der Erfindung weist die Auflageschiene in der Auflagefläche eine radial verlaufende erste Längsnut auf, in welche das Zentrierstück mit einem als Nutenstein ausgebildeten ersten Abschnitt eingreift, und aus der das Zentrierstück mit einem zweiten Abschnitt herausragt. Auf diese Weise kann das Zentrierstück in der Längsnut geführt und gegen Verdrehen gesichert werden, so dass eine einzige Spannschraube genügt, um das Zentrierstück in der jeweiligen Zentrierstellung an der Auflageschiene zu fixieren.

Das Spannstück kann nach der Erfindung ein in der ersten Längsnut der Auflageschiene angeordneter Nutenstein sein, der nicht aus der ersten Längsnut herausragt und daher das Auflegen eines Rotors auf die Auflageschiene nicht behindert. Die Auflageschiene kann weiterhin auf der der Auflagefläche entgegengesetzten Seite eine zur ersten Längsnut parallele zweite Längsnut und einen die erste und die zweite Längsnut miteinander verbindenden Längsschlitz aufweisen, wobei in der zweiten Längsnut wenigstens ein Nutenstein angeordnet ist, der durch eine den Längsschlitz durchdringende Schraube mit dem Zentrierstück und/oder dem Spannstück verbunden ist. Diese Gestaltung ist einfach und kostengünstig herstellbar und ermöglich eine stufenlose Positionierung von Zentrierstück und/oder Spannstück in radialer Richtung.

Nach einem weiteren Vorschlag der Erfindung können die radial inneren Enden der Auflageschienen in einem Abstand von der Mittelachse des Grundelements angeordnet sein, wobei das Grundelement in der Mitte zwischen den inneren Enden der Auflageschienen Haltemittel zur Befestigung eines weiteren Elements, beispielsweise eines Spanndeckels, aufweist. Diese Gestaltung ermöglich das Festspannen eines Rotors mit einem zusätzlichen Spanndeckel und die Erweiterung der Vorrichtung durch Anbringung von zusätzlichen Auflage-, Zentrier- oder Stützelementen, um hierdurch die Anwendungsbreite der Vorrichtung noch weiter zu vergrößern.

Das Grundelement ist vorzugsweise eine ebene, kreisförmige Scheibe, die in rotationssymmetrischer Anordnung Befestigungsbohrungen zur Aufnahme von Befestigungsschrauben aufweist. Die Auflageschienen haben vorzugsweise zu den Auflageflächen parallele Außenflächen, mit denen sie auf dem ebenen Grundelement aufliegen.

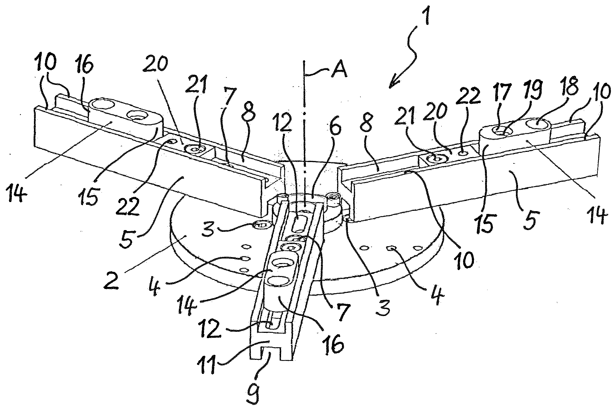

Ein bevorzugtes Ausführungsbeispiel der Erfindung ist in der Zeichnung dargestellt und wird im Folgenden näher beschrieben.

Die Zeichnung zeigt eine Vorrichtung 1 zur Lagerung eines Rotors in einer Universalauswuchtmaschine mit vertikal ausgerichteter Spindel. Die Vorrichtung 1 weist eine Grundelement 2 auf, das die Form einer ebenen, kreisrunden Scheibe hat, die rotationssymmetrisch in Bezug auf eine Mittelachse A ausgebildet ist. Das Grundelement 2 weist eine zentrale Zentrierbohrung und daneben eine Reihe von Befestigungsbohrungen 3, 4 auf. Die Befestigungsbohrungen 3 dienen zur versenkten Aufnahme von Schrauben, mit denen das Grundelement 2 an der Spindel einer Auswuchtmaschine befestigt werden kann. Die Befestigungsbohrungen 4 sind zur Befestigung von Auflageschienen 5 bestimmt. In der Zeichnung sind nur die Befestigungsbohrungen 4 sichtbar, die in Viererteilung angeordnet sind, um damit vier im gleichmäßigen Abstand voneinander angeordnete Auflageschienen befestigen zu können. Die in regelmäßiger Dreierteilung angeordneten Befestigungsbohrungen 4 sind durch die damit befestigten und in der Zeichnung dargestellten Auflageschienen 5 verdeckt.

Im Zentrum des Grundelements 2 ist ein ringförmiges Element 6 durch Schrauben lösbar befestigt und gegenüber dem Grundelement 2 exakt zentriert. Bei dem Element 6 kann es sich um eine Halterung für einen Spanndeckel oder für ein zusätzliches Zentrier- oder Stützelement handeln, das für manche Anwendungen zweckmäßig ist. Das Element 6 kann auch zur Lagerung eines Dorns für das Einmessen der einstellbaren Zentrierstücke dienen oder Teil einer nicht dargestellten Einmessvorrichtung sein.

An dem Grundelement 2 sind drei Auflageschienen 5 mittels Schrauben 7 befestigt. Die Auflageschienen 5 sind gleich und haben eine langgestreckte Form mit ebenen, parallelen Außenflächen, die mit den Flächen eines Quaders zusammenfallen und sich über die gesamte Länge der Auflageschienen 5 erstrecken. Auf zwei einander entgegengesetzten Seiten weisen die Auflageschienen 5 jeweils Längsnuten 8, 9 von rechteckigem Querschnitt auf.

Die Auflageschienen 5 sind mit einer Außenfläche so an dem Grundelement 2 befestigt, dass sich die erste Längsnut 8 auf der von dem Grundelement 2 abgekehrten Oberseite und die zweite Längsnut 9 auf der dem Grundelement 2 zugekehrten Unterseite der Auflageschienen 5 befindet. Die Auflageschienen 5 sind nur mit einem inneren Ende an dem Grundelement 2 befestigt und ragen mit ihrem äußeren Ende nach außen über den Umfangsrand der Grundplatte 2 hinaus. Die auf beiden Seiten an die erste Längsnut 8 angrenzenden und in einer gemeinsamen Ebene liegenden Abschnitte einer Außenfläche dienen als Auflageflächen 10 für einen auszuwuchtenden Rotor. Mit den diesen entgegengesetzten Flächen liegen die Auflageschienen 5 auf dem Grundelement 2 auf. Die Längsnuten 8, 9 sind durch eine mittlere Wand 11 voneinander getrennt. In der Wand 11 befindet sich ein Längsschlitze 12 oder mehrere, die eine geringere Breite haben, als die Längsnuten 8, 9. Der Längsschlitz 12 ist zum Durchstecken von Schrauben bestimmt.

In der Längsnut 8 der einzelnen Auflageschienen ist jeweils ein Zentrierstück 14 angeordnet. Das Zentrierstück 14 hat die Form einer Passfeder mit rechteckigem Querschnitt und abgerundeten Enden. Die Breite des Zentrierstücks 14 ist an die Breite der Längsnut 8 derart angepasst, dass das Zentrierstück 14 ohne großen Widerstand in der Längsnut verschoben werden kann. Die Enden des Zentrierstücks 14 bilden konvex gekrümmte Anlageflächen 15, 16, deren Krümmungsachsen im Wesentlichen parallel zur Mittelachse A verlaufen. Zur Befestigung an der Auflageschiene 5 ist das Zentrierstück 14 mit zwei gestuften Durchgangsbohrungen 17, 18 versehen. In der Durchgangsbohrung 17 befindet sich eine Spannschraube 19 die durch einen der Längsschlitze 12 hindurchragt und in einen in der Längsnut 9 verschiebbar angeordneten Nutenstein eingeschraubt ist. Durch Anziehen der Spannschraube 19 kann das Zentrierstück 14 in der jeweiligen Zentrierstellung an der Auflageschiene 5 festgespannt werden. Befindet sich bei einer durch den Rotor vorgegebenen Zentrierstellung in der Flucht der Durchgangsbohrung 17 ein den Längsschlitz 12 begrenzender Abschnitt der Wand 11, so kann das Zentrierstück 14 festgespannt werden, indem die Spannschraube 19 in die Durchgangsbohrung 18 eingesetzt und in den entsprechend angeordneten Nutenstein eingeschraubt wird.

In der Längsnut 8 der Auflageschiene 5 ist weiterhin ein nach Art eines Nutensteins ausgebildetes Spannstück 20 angeordnet, das mittels einer einen Längsschlitz 12 durchdringenden Spannschraube 21 und einem in der Längsnut 9 angeordneten Nutenstein an der Auflageschiene 5 festklemmbar ist. Das Spannstück 20 hat ein im Abstand von der Spannschraube 21 angeordnete Befestigungsbohrung 22, die zur Aufnahme eines Mitnehmerstiftes oder einer Schraube dient, mit welcher der auszuwuchtende Rotor sicher gegen die Auflageschiene 5 gespannt werden kann. Das axiale Spannen kann zur Messgenauigkeit beitragen und bei dynamischem Auswuchten zur Drehmomentübertragung dienen. Das Spannstück 20 ist ebenfalls in Längsrichtung der Auflageschiene 5 verstellbar und kann bei Bedarf um 180° um die Achse der Spannschraube 21 gedreht in die Längsnut 8 eingesetzt werden, wenn die durch den Rotor vorgegebene Position der Stelle zur Drehmomentübertragung dies erfordert.

In der in der Zeichnung dargestellten Einstellung eignet sich die Vorrichtung 1 zur Außenzentrierung eines Rotors, dessen Zentrierdurchmesser gleich dem doppelten Abstand der Anlageflächen 15 der Zentrierstücke 14 von der Mittelachse A entspricht. Außerdem kann ein Rotor mit Innenzentrierung gelagert werden, wenn der Durchmesser seiner Zentrierbohrung dem doppelten Abstand der Anlageflächen 16 der Zentrierstücke 14 von der Mittelachse A entspricht. Im Falle einer solchen Innenzentrierung kann allerdings die Anordnung der Spannstücke 20 ungeeignet sein, so das diese dann radial außerhalb der Zentrierstücke 14 angeordnet werden müssen. Dies ist insbesondere auch dann notwendig, wenn der für die Innenzentrierung zur Verfügung stehende Durchmesser der Zentrierfläche so klein ist, dass die Zentrierstücke 14 bis zum radialen inneren Ende der Auflageschienen 5 verschoben werden müssen.

Die beschriebene Vorrichtung mit ihren einstellbaren Zentrierungen eignet sich besonders für Universalauswuchtmaschinen mit vertikaler Spindel, wenn kleinere Losgrößen von häufig wechselnden Rotorausführungen auszuwuchten sind. Die Genauigkeit der Vorrichtung ist ausreichend für die üblichen Anwendungen und ist größer als diejenige von Universalaufnahmen mit beispielsweise Mehrbackenfutter. Durch den weiten Verstellbereich der Zentrierstücke kann im Vergleich zu bekannten Lösungen eine deutlich größere Zahl von unterschiedlichen Rotorausführungen aufgenommen werden, wobei keine mechanische Bearbeitung zur Aufnahme der Rotoren in unterschiedlichen Zentrierdurchmessern erforderlich ist. Sowohl Innen- als auch Außenzentrierung ist möglich und durch formschlüssige Mittel zur Drehmomentübertragung ist eine größere Sicherheit bei Rotoren mit großem Massenträgheitsmoment gegeben. Die beschriebene Vorrichtung kann außerdem vorteilhaft bei statischen Auswuchtmaschinen angewendet werden.

## Patentansprüche

1. Vorrichtung zur Lagerung eines auszuwuchtenden Rotors in einer Auswuchtmaschine, umfassend ein Grundelement (2) mit einer Mittelachse (A), das dazu ausgebildet ist, um mit einer drehbaren Spindel einer dynamischen Auswuchtmaschine oder einer Aufnahmeachse einer statischen Auswuchtmaschine koaxial verbunden werden zu können, **dadurch gekennzeichnet, dass** und mehrere Auflageschienen (5), die mit einem inneren Ende an dem Grundelement (2) befestigt sind, sich im wesentlichen radial zur Mittelachse des Grundelements (2) erstrecken und mit dem anderen äußeren Ende über den äußeren Rand des Grundelements (2) hinaus ragen und die in einer gemeinsamen Radialebene liegende Auflageflächen (10) für den auszuwuchtenden Rotor haben, wobei an jeder Auflageschiene (5) ein Zentrierstück (14) für eine Innen- und/oder Außenzentrierung des Rotors angeordnet ist, das gegenüber der Auflageschiene (5) radial verstellbar und in einer beliebigen Zentrierstellung mit der Auflageschiene (5) fest verbindbar ist.

2. Vorrichtung nach Anspruch 1, **dadurch gekennzeichnet, dass** an wenigstens einer Auflageschiene (5) ein Spannstück (20) angeordnet ist, das radial verstellbar und innerhalb seines Verstellbereiches in einer beliebigen Spannstellung mit der Auflageschiene (5) fest verbindbar ist.

3. Vorrichtung nach Anspruch 2, **dadurch gekennzeichnet, dass** das Spannstück (20) eine Befestigungsbohrung (22) zur Aufnahme eines Mitnehmerbolzens oder einer Spannschraube aufweist.

4. Vorrichtung nach einem der vorhergehenden Ansprüche, **dadurch gekennzeichnet, dass** das Zentrierstück (14) eine radial innere Anlagefläche (15) und eine radial äußere Anlagefläche (16) aufweist.

5. Vorrichtung nach einem der vorhergehenden Ansprüche, **dadurch gekennzeichnet, dass** das Zentrierstück (14) eine konvex gekrümmte Anlagefläche (15, 16) aufweist, deren Krümmungsachse parallel zur Mittelachse (A) des Grundelements (2) ausgerichtet ist.

6. Vorrichtung nach einem der vorhergehenden Ansprüche, **dadurch gekennzeichnet, dass** die Auflageschiene (5) in der Auflagefläche (10) eine radial verlaufende erste Längsnut (8) aufweist und dass das Zentrierstück (14) mit einem als Nutenstein ausgebildeten ersten Abschnitt in die erste Längsnut (8) eingreift und mit einem zweiten Abschnitt aus der ersten Längsnut (8) herausragt.

7. Vorrichtung nach Anspruch 6 in Verbindung mit Anspruch 2, **dadurch gekennzeichnet, dass** das Spannstück (20) ein in der ersten Längsnut (8) der Auflageschiene (5) angeordneter Nutenstein ist, der nicht aus der ersten Längsnut (8) herausragt.

8. Vorrichtung nach einem der Ansprüche 6 oder 7, **dadurch gekennzeichnet, dass** die Auflageschiene (5) auf der der Auflagefläche (10) entgegengesetzten Seite eine zur ersten Längsnut (8) parallele zweite Längsnut (9) und einen die erste und die zweite Längsnut miteinander verbindenden Längsschlitz (12) aufweist und dass in der zweiten Längsnut (9) wenigstens ein Nutenstein angeordnet ist, der durch eine den Längsschlitze durchdringende Spannschraube mit dem Zentrierstück (14) und/oder dem Spannstück (20) verbunden ist.

9. Vorrichtung nach einem der vorhergehenden Ansprüche, **dadurch gekennzeichnet, dass** das Zentrierstück (14) zwei parallele Befestigungsbohrungen (17, 18) zur alternativen Aufnahme einer Spannschraube (19) aufweist.

10. Vorrichtung nach einem der vorhergehenden Ansprüche, **dadurch gekennzeichnet, dass** die radial inneren Enden der Auflageschienen (5) in einem Abstand von der Mittelachse (A) des Grundelements (2) angeordnet sind und dass das Grundelement (2) in der Mitte zwischen den inneren Enden der Auflageschienen Haltemittel zur Befestigung eines weiteren Elements (6) aufweist.

11. Vorrichtung nach einem der vorhergehenden Ansprüche, **dadurch gekennzeichnet, dass** das Grundelement (2) eine ebene, kreisförmige Scheibe ist, die in rotationssymmetrischer Anordnung Befestigungsbohrungen (4) zur Aufnahme von Befestigungsschrauben aufweist.

12. Vorrichtung nach einem der vorhergehenden Ansprüche, **dadurch gekennzeichnet, dass** die Auflageschienen (5) zu den Auflageflächen (10) parallele Außenflächen haben, mit denen sie auf dem Grundelement aufliegen.

## Claims

1. Device for mounting a rotor to be balanced in a balancing machine, said device comprising a base element (2) having a central axis (A), which base element is designed to be able to be coaxially connected to a rotatable spindle of a dynamic balancing machine or to a receiving shaft of a static balancing machine, **characterised in that** a plurality of bearing rails (5), which are fastened by means of an inner end to the base element (2), extend substantially radially with respect to the central axis of the base element (2) and project by means of the other outer end beyond the outer edge of the base element (2) and have bearing surfaces (10), lying in a common radial plane, for the rotor to be balanced, wherein a centring piece (14) for inner and/or outer centring of the rotor being arranged on each bearing rail (5), which centring piece can be radially displaced with respect to the bearing rail (5) and can be fixed to the bearing rail (5) in any centring position.

2. Device according to claim 1, **characterised in that** a clamping piece (20) is arranged on at least one bearing rail (5), which clamping piece is radially displaceable and, in its displacement region, can be fixed to the bearing rail (5) in any clamping position.

3. Device according to claim 2, **characterised in that** the clamping piece (20) comprises a fastening hole (22) for receiving a retaining bolt or a clamping screw.

4. Device according to any of the preceding claims, **characterised in that** the centring piece (14) comprises a radially inner contact surface (15) and a radially outer contact surface (16).

5. Device according to any of the preceding claims, **characterised in that** the centring piece (14) comprises a convexly curved contact surface (15, 16), the axis of curvature of which is oriented in parallel with the central axis (A) of the base element (2).

6. Device according to any of the preceding claims, **characterised in that** the bearing rail (5) comprises in the bearing surface (10) a radially extending first longitudinal channel (8), and **in that** the centring piece (14) engages in the first longitudinal channel (8) by means of a first portion in the form of a sliding block and projects out of the first longitudinal channel (8) by means of a second portion.

7. Device according to claim 6 in combination with claim 2, **characterised in that** the clamping piece (20) is a sliding block which is arranged in the first longitudinal channel (8) in the bearing rail (5) and does not project out of the first longitudinal channel (8).

8. Device according to either claim 6 or claim 7, **characterised in that** the bearing rail (6) comprises a second longitudinal channel (9), parallel to the first longitudinal channel (8), on the side opposite the bearing surface (10), and a longitudinal slot (12) that interconnects the first and the second longitudinal channel, and **in that** at least one sliding block is arranged in the second longitudinal channel (9), which sliding block is connected to the centring piece (14) and/or to the clamping piece (20) by means of a clamping screw that passes through the longitudinal slot.

9. Device according to any of the preceding claims, **characterised in that** the centring piece (14) comprises two parallel fastening holes (17, 18) as an alternative for receiving a clamping screw (19).

10. Device according to any of the preceding claims, **characterised in that** the radially inner ends of the bearing rails (5) are arranged so as to be spaced apart from the central axis (A) of the base element (2), and **in that**, in the centre between the inner ends of the bearing rails, the base element (2) comprises holding means for fastening an additional element (6).

11. Device according to any of the preceding claims, **characterised in that** the base element (2) is a planar, circular disc that comprises, in a rotationally symmetrical arrangement, fastening holes (4) for receiving fastening screws.

12. Device according to any of the preceding claims, **characterised in that** the bearing rails (5) have outer surfaces that are parallel to the bearing surfaces (10), by means of which outer surfaces said bearing rails rest on the base element.

## Revendications

1. Dispositif pour le logement d'un rotor à équilibrer dans une machine d'équilibrage, comprenant un élément de base (2) qui est pourvu d'un axe médian (A) et qui est conçu pour pouvoir être relié de façon coaxiale à une broche rotative d'une machine d'équilibrage dynamique ou à un axe de réception d'une machine d'équilibrage statique, **caractérisé en ce que** plusieurs rails de support (5), qui sont fixés par une extrémité intérieure sur l'élément de base (2), s'étendent sensiblement radialement par rapport à l'axe médian de l'élément de base (2) et saillent, avec l'autre extrémité extérieure, du bord extérieur de l'élément de base (2) et qui présentent des surfaces de support (10) situées dans un plan radial commun pour le rotor à équilibrer, une pièce de centrage (14) pour un centrage intérieur et/ou extérieur du rotor étant disposée sur chaque rail de support (5), laquelle pièce peut être déplacée radialement par rapport au rail de support (5) et peut être reliée fixement au rail de support (5) dans une position de centrage quelconque.

2. Dispositif selon la revendication 1, **caractérisé en ce qu'**une pièce de serrage (20) est disposée sur au moins un rail de support (5), laquelle pièce peut être déplacée radialement et peut être reliée fixement au rail de support (5) dans une position de serrage quelconque à l'intérieur de sa zone de déplacement.

3. Dispositif selon la revendication 2, **caractérisé en ce que** la pièce de serrage (20) comprend un trou de fixation (22) pour la réception d'un boulon d'entraînement ou d'une vis de serrage.

4. Dispositif selon l'une des revendications précédentes, **caractérisé en ce que** la pièce de centrage (14) comprend une surface d'appui (15) radialement intérieure et une surface d'appui (16) radialement extérieure.

5. Dispositif selon l'une des revendications précédentes, **caractérisé en ce que** la pièce de centrage (14) présente une surface d'appui (15, 16) courbée de manière convexe, dont l'axe de courbure est orienté parallèlement à l'axe médian (A) de l'élément de base (2).

6. Dispositif selon l'une des revendications précédentes, **caractérisé en ce que** le rail de support (5) présente dans la surface de support (10) une première rainure longitudinale (8) s'étendant radialement, et **en ce que** la pièce de centrage (14) s'engage dans la première rainure longitudinale (8) par une première section réalisée sous la forme d'un coulisseau et saille de la première rainure longitudinale (8) par une deuxième section.

7. Dispositif selon la revendication 6 en liaison avec la revendication 2, **caractérisé en ce que** la pièce de serrage (20) est un coulisseau qui est disposé dans la première rainure longitudinale (8) du rail de support (5) et qui ne saille pas de la première rainure longitudinale (8).

8. Dispositif selon l'une des revendications 6 ou 7, **caractérisé en ce que** le rail de support (5) présente sur la face opposée à la surface de support (10) une deuxième rainure longitudinale (9) parallèle à la première rainure longitudinale (8) et une fente longitudinale (12) reliant la première et la deuxième rainure longitudinale l'une à l'autre, et **en ce qu'**au moins un coulisseau, qui est relié à la pièce de centrage (14) et/ou à la pièce de serrage (20) par une vis de serrage traversant la fente longitudinale, est disposé dans la deuxième rainure longitudinale (9).

9. Dispositif selon l'une des revendications précédentes, **caractérisé en ce que** la pièce de centrage (14) comprend deux trous de fixation (17, 18) parallèles pour la réception alternative d'une vis de serrage (19).

10. Dispositif selon l'une des revendications précédentes, **caractérisé en ce que** les extrémités radialement intérieures des rails de support (5) sont disposées à distance de l'axe médian (A) de l'élément de base (2), et **en ce que** l'élément de base (2) présente au centre, entre les extrémités intérieures des rails de support, des moyens de retenue pour la fixation d'un autre élément (6).

11. Dispositif selon l'une des revendications précédentes, **caractérisé en ce que** l'élément de base (2) est un disque plat circulaire qui comprend, dans un agencement en symétrie de rotation, des trous de fixation (4) pour la réception de vis de fixation.

12. Dispositif selon l'une des revendications précédentes, **caractérisé en ce que** les rails de support (5) présentent des surfaces extérieures parallèles par rapport aux surfaces de support (10) au moyen desquelles ils reposent sur l'élément de base.
